(19) Europäisches Patentamt
European Patent Office
Office européen des brevets

(11) **EP 4 455 193 A1**

(12) # EUROPEAN PATENT APPLICATION
published in accordance with Art. 153(4) EPC

(43) Date of publication:
**30.10.2024 Bulletin 2024/44**

(21) Application number: **22911298.2**

(22) Date of filing: **21.12.2022**

(51) International Patent Classification (IPC):
*C08J 3/22* (2006.01)     *B65D 1/00* (2006.01)
*B65D 65/02* (2006.01)     *C08J 5/18* (2006.01)
*C08L 67/02* (2006.01)

(52) Cooperative Patent Classification (CPC):
**B65D 1/00; B65D 65/02; C08J 3/22; C08J 5/18; C08L 67/02**

(86) International application number:
**PCT/JP2022/047191**

(87) International publication number:
**WO 2023/120596 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2021 JP 2021209347**

(71) Applicants:
• **KIRIN HOLDINGS KABUSHIKI KAISHA**
  **Nakano-ku, Tokyo 164-0001 (JP)**
• **Mitsubishi Chemical Corporation**
  **Tokyo 100-8251 (JP)**

(72) Inventors:
• **YAMAGUCHI, Yohei**
  **Tokyo 164-0001 (JP)**
• **NAKAYA, Masaki**
  **Tokyo 164-0001 (JP)**
• **OOKUBO, Tatsunori**
  **Tokyo 164-0001 (JP)**
• **SATO, Takashi**
  **Tokyo 100-8251 (JP)**
• **SHIRAHAMA, Rie**
  **Tokyo 100-8251 (JP)**
• **KATO, Satoshi**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **MASTERBATCH, PREFORM, BLOW-MOLDED BOTTLE, BEVERAGE PRODUCT, FILM, METHOD FOR PRODUCING PREFORM, AND METHOD FOR PRODUCING BLOW-MOLDED BOTTLE**

(57)    An object of the present disclosure is to provide a masterbatch, a preform, a blow-molded bottle, a film, a beverage product, a method for forming a preform, a method for producing a blow-molded bottle and a method for producing a film, which realize stable blend molding of PET and PEF without prolonging molding time and achieve fine quality of a resulting molded object. A masterbatch according to the disclosure includes: a polyester resin (A) containing a structural unit derived from tereph- thalic acid (A-1) and a structural unit derived from an aliphatic diol (A-2); and a polyester resin (B) containing a structural unit derived from 2,5-furandicarboxylic acid (B-1) and a structural unit derived from 1,2-ethanediol (B-2), in which the proportion is the polyester resin (B), determined by (Expression 1), of 45 mass% to 90 wt% and an intrinsic viscosity (IV value), measured under (Condition 1), is 0.50 dl/g to 1.20 dl/g.

EP 4 455 193 A1

**(Cont. next page)**

FIG. 1

# Light flux

$$I_1 = I_2$$

$I_1$ $I_2$

## Preform

## Integrating sphere

**Description**

Technical Field

The present disclosure relates to a masterbatch containing, for example, a polyethylene terephthalate resin (hereinafter, referred to also as a PET resin or PET) and a polyethylene furanoate resin (hereinafter, referred to also as a PEF resin or PEF). The disclosure further relates to a preform formed of the masterbatch, a bottle obtained by blow-molding the preform, a beverage product prepared by filling the bottle with a beverage, a film using the masterbatch, a method for producing the preform and a method for producing the blow-molded bottle.

Background Art

Conventionally, PET is known to be excellent in transparency, mechanical properties, and gas barrier properties, and widely used as receptacles for beverages, such as a carbonated beverage, fruit juice and water, and films for, e.g., a display member, a food packaging member and a building material. Furthermore, PEF is a polyester expected as an alternative to PET.

For example, a preform containing PEF, for producing a plastic receptacle by a stretch blow-molding process, is disclosed (see, for example, Patent Literature 1). Specifically, the literature discloses that a preform, is having a viscosity of 0.75 dl/g to 0.9 dl/g and a water content of less than 50 ppm, can turn into a receptacle having high mechanical strength and barrier properties. Regarding film applications, biaxially stretched film using PEF is disclosed (see, Patent Literature 2).

Citation List

Patent Literature

Patent Literature 1: JP 2018-510800 A
Patent Literature 2: JP 2017-536427 A

Summary of Invention

Technical Problem

Since PEF has higher heat-resistance and gas barrier properties than PET, blending PET and PEF promises to produce a receptacle that can be filled with a liquid susceptible to oxidative deterioration such as beer, fruit juice, or tea beverage, or a liquid such as hot beverages to be vended.

However, in blend molding of PET and PEF having different heat resistant temperatures, there are a problem that the kneading time, necessary for compatibilizing different resins, increases, and a problem that molding quality deteriorates due to a difference in crystallization rate in a molding process, particularly during cooling. These problems cause prolongation of molding time, destabilization of molding and quality-deterioration of a molded object.

Then, an object of the present disclosure is to provide a masterbatch, a preform, a blow-molded bottle, a film, a beverage product, a method for forming a preform, a method for producing a blow-molded bottle and a method for producing a film, which realize stable blend molding of PET and PEF without prolonging molding time and achieve fine quality of a resulting molded object.

Solution to Problem

As a result of intensive studies, the present inventors have found that a masterbatch, obtained by blending PET as a main material and PEF as an additive with a predetermined high-concentration of PEF as the additive to the main material, enables short-time compatibilization and kneading, and produces a blended polyester molded object excellent in molding quality and productivity. Based on the finding, the present invention has been achieved. Specifically, the masterbatch according to the present invention contains a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, in which a proportion of the polyester resin (B), determined by (Expression 1), is 45 mass% to 90 wt% and an intrinsic viscosity (IV value), measured under (Condition 1), is 0.50 dl/g to 1.20 dl/g.

Proportion of polyester resin (B) (mass%) = content of polyester resin (B) / (content of polyester resin (A) + content of polyester resin (B))

(Condition 1) a 0.25 g portion of the masterbatch, dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

The masterbatch according to the present invention encompasses an embodiment for molding a pressure-resistant bottle, a bottle for vending a hot product therein or a heat-resistant bottle.

A method for producing a molded object according to the present invention includes a step of preparing a masterbatch containing a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, and having a proportion of the polyester resin (B), determined by (Mathematical Formula 1), of 90 mass% or less and an intrinsic viscosity (IV value), measured under (Condition 1), of 0.50 dl/g to 1.20 dl/g; and a step of forming a molded object by melt-kneading the masterbatch and the polyester resin (A) separately.

Proportion of polyester resin (B) (mass%) = content of polyester resin (B) / (content of polyester resin (A) + content of polyester resin (B))

(Condition 1) a 0.25 g portion of the masterbatch, dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

In the method for producing the molded object according to the present invention, the masterbatch is a masterbatch in which the proportion of a polyester resin (B), determined by (Mathematical Formula 1), is 45 mass% to 90 wt%; and the step of forming the molded object is a step of forming a preform for a bottle by blending the masterbatch and the polyester resin (A).

A method for producing a blow-molded bottle according to the present invention includes a step of forming a bottle by blow-molding the preform obtained by the method for producing a molded object according to the present invention.

A preform according to the present invention is a preform for a bottle formed of a resin composition containing a polyester resin (A) containing a structural unit (A-1) derived from terephthalic acid and a structural unit (A-2) derived from an aliphatic diol,

and a polyester resin (B) containing a structural unit (B-1) derived from a 2,5-furandicarboxylic acid and a structural unit (B-2) derived from 1,2-ethanediol and

having a proportion of the polyester resin (B), determined by (Mathematical Formula 1), of 5 to 25 mass%.

In the preform, an intrinsic viscosity (IV value), measured under (Condition 2), is 0.65 dl/g or more and 1.00 dl/g or less, and a haze, measured in accordance with JIS K 7136: 2000 "Plastics-Determination of haze for transparent materials" except that a light flux is focused on a 7.0 mm-square, is 0.1 to 8%.

Proportion of polyester resin (B) (mass%) = content of polyester resin (B)/(content of polyester resin (A) + content of polyester resin (B))       (Mathematical Formula 1)

(Condition 2) a 0.25 g sample, cut out from the preform and then dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

A blow-molded bottle according to the present invention is a blow-molded bottle formed of a resin composition containing a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol and having a proportion of the polyester resin (B), determined by (Mathematical Formula 1), of 5 to 25 mass%. The bottle is characterized in that an intrinsic viscosity (IV value), measured under (Condition 3), is 0.65 dl/g or more and 1.00 dl/g or less, and a haze, measured in accordance with JIS K 7136: 2000 "Plastics-Determination of haze for transparent materials" except that a light flux is focused on a 7.0 mm-square, is 0.1 to 20%.

Proportion of polyester resin (B) (mass%) = content of polyester resin (B)/(content of polyester resin (A) + content of polyester resin (B))          (Mathematical Formula 1)

(Condition 3) a 0.25 g sample, cut out from the blow-molded bottle and then dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

The blow-molded bottle according to the present invention is preferably a pressure-resistant bottle for filling a carbonated liquid. The blow-molded bottle according to the present invention is excellent in pressure-resistance and heat-resistance, and suitable for filling a carbonated liquid. In addition, recyclability thereof is favorable.

The blow-molded bottle according to the present invention is preferably a bottle for vending a hot product therein or a heat-resistant bottle for filling at a high temperature. The blow-molded bottle according to the present invention is excellent in heat resistance and high gas barrier properties. For example, in vending a hot beverage in the bottle at 60°C or filling the bottle with a liquid of 90°C, deformation of the bottle can be avoided. As a result, the degree of freedom of the receptacle design is high and receptacle weight reduction and $CO_2$ emission reduction can be realized. In addition, recyclability thereof is favorable.

A beverage product according to the present invention is characterized in that the molded bottle according to the present invention is filled with a beverage.

The method for producing the molded object according to the present invention encompasses an embodiment in which the molded object is a film form.

A film according to the present invention is a film formed of a resin composition containing a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, and having a proportion of the polyester resin (B), determined by (Mathematical Formula 1), of 1 to 90 mass%. In the film, an intrinsic viscosity (IV value), measured under (Condition 4), is 0.50 dl/g or more and 1.00 dl/g or less, and a haze, measured in accordance with JIS K 7136: 2000 "Plastics-Determination of haze for transparent materials" except that a light flux is focused on a 7.0 mm-square, is 0.01 to 6.0%.

Proportion of polyester resin (B) (mass%) = content of polyester resin (B)/(content of polyester resin (A) + content of polyester resin (B))          (Mathematical Formula 1)

(Condition 4) a 0.25 g portion of the film, dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

Advantageous Effects of Invention

According to the disclosure, it is practical to provide a masterbatch, a preform, a blow-molded bottle, a film, a beverage product, a method for forming a preform, a method for producing a blow-molded bottle and a method for producing a film, which realize stable blend molding of PET and PEF without prolonging molding time and achieve fine quality of a resulting molded object. The obtained molded object has a high molding quality and high productivity.

Brief Description of Drawings

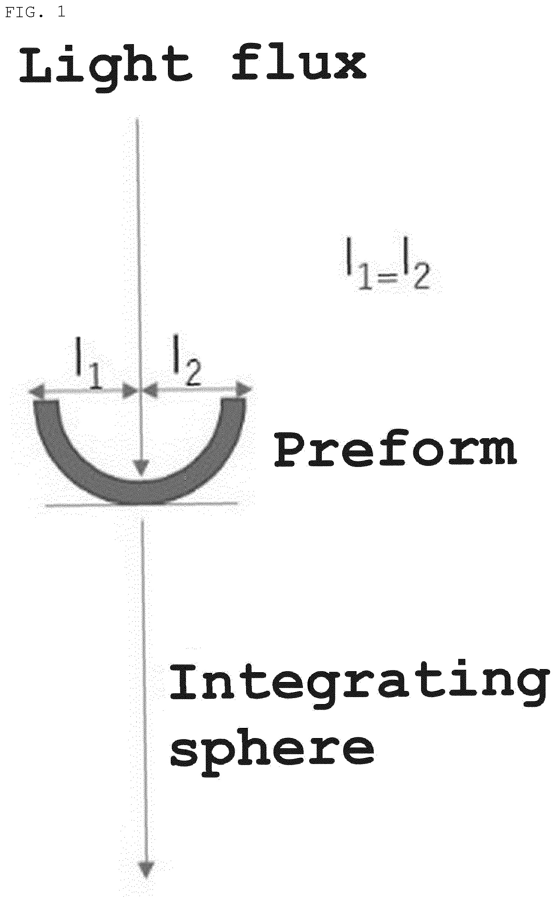

Fig. 1 is a schematic view illustrating a method for measuring a haze of a preform.

Description of Embodiments

Embodiments of the present invention will be described with reference to the drawing but the present invention should not be construed as limiting to these descriptions. The embodiments may be modified in various ways as long as the effect of the present invention is exerted.

[Masterbatch]

The masterbatch according to the embodiment contains a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, and has a proportion of the polyester resin (B), determined by (Mathematical Formula 1), of 90 mass% or less.

Proportion of polyester resin (B) (mass%) = content of polyester resin (B)/(content of polyester resin (A) + content of polyester resin (B))    (Mathematical Formula 1)

In the specification, a "structural unit derived from ..." refers to a structural unit derived from a monomer and incorporated into a polymer, i.e., polyester. The "structural unit derived from ..." will be hereinafter referred to simply as "unit" or "structural unit". For example, a "structural unit derived from a diol" may be referred to as a "diol unit" or a "diol structural unit"; a "structural unit derived from terephthalic acid" may be referred to as a "terephthalic acid unit", or a "terephthalic acid structural unit"; a "structural unit derived from 2,5-furandicarboxylic acid" may be referred to as a "2,5-furandicarboxylic acid unit" or a "2,5-furandicarboxylic acid structural unit"; and a "structural unit derived from 1,2-ethanediol" may be referred to as a "1,2-ethanediol unit" or a "1,2-ethanediol structural unit".

In the specification, a "main structural unit" refers to a structural unit occupying the largest percentage of the "structural units" and is usually a structural unit occupying 50 mol% or more, preferably 70 mol% or more, more preferably 80 mol% or more and further preferably 90 to 100 mol%, of the structure units.

(Polyester resin)

A polyester resin contains a dicarboxylic acid unit and a diol unit. Herein, a polyester resin (A) preferably has a terephthalic acid unit as the main structural unit of all dicarboxylic acid units constituting polyester and an aliphatic diol unit as the main structural unit of all diol units constituting the polyester. An ethylene glycol unit is more preferably a main structural unit of all diol units constituting the polyester. Furthermore, a polyester resin (B) contains a 2,5-furandicarboxylic acid unit as the main structural unit of all dicarboxylic acid units constituting the polyester and a 1,2-ethanediol unit as the main structural unit of all diol units constituting the polyester.

The polyester resin (A) includes a PET resin. The polyester resin (B) may be a PEF resin. Now, the polyester resin (A) and polyester resin (B) will be specifically described.

(Polyester resin (A))

<Dicarboxylic acid structural unit>

The polyester resin (A) contains a structural unit (A-1) derived from terephthalic acid as a dicarboxylic acid structural unit. Containing the structural unit (A-1) derived from terephthalic acid heightens a glass-transition temperature, and satisfies heat resistance and, further, the gas barrier properties. The polyester resin (A) preferably contains a structural unit (A-1) derived from terephthalic acid as a main dicarboxylic acid unit. Specifically, a preferable ratio of the structural unit (A-1) derived from terephthalic acid to all, 100 mol% of, the dicarboxylic acid structural units is usually 50 mol% or more, preferably 70 mol% or more, more preferably 80 mol% or more, and further preferably 90 to 100 mol%.

A structural unit of a dicarboxylic acid other than the terephthalic acid (also referred to as a "dicarboxylic acid other than terephthalic acid") unit may be present as the dicarboxylic acid unit. Examples of the dicarboxylic acid other than terephthalic acid include aliphatic dicarboxylic acids and aromatic dicarboxylic acids excluding terephthalic acid. Examples of the aliphatic dicarboxylic acids include linear aliphatic dicarboxylic acids such as oxalic acid, succinic acid, glutaric acid, adipic acid, sebacic acid, dimer acid, and dodecanedioic acid; and alicyclic dicarboxylic acids such as 1,6-cyclohexanedicarboxylic acid. Examples of the aromatic dicarboxylic acids excluding terephthalic acid include isophthalic acid, naphthalene dicarboxylic acid and diphenyldicarboxylic acid.

When a structural unit of a kind of dicarboxylic acid other than terephthalic acid is contained as the dicarboxylic acid structural unit, a structural unit of exactly one kind of dicarboxylic acid other than terephthalic acid may be contained, or structural units of two or more kinds of dicarboxylic acids other than terephthalic acid may be contained in any combination and with any ratio. When a polyester resin (A) contains a structural unit of a dicarboxylic acid other than terephthalic acid, the content thereof is preferably low from the viewpoint of easily and sufficiently obtaining the above effect produced by a terephthalic acid structural unit contained therein. Whereas, the content is preferably high from the viewpoint of excellent flexibility. Then, when a structural unit of a kind of dicarboxylic acid other than terephthalic acid is contained, the preferable ratio thereof to all, 100 mol% of, the dicarboxylic acid structural units is usually 10 mol% or more, preferably 20 mol% or more, and further preferably 30 mol% or more, the upper limit of which is usually 50 mol%.

<Diol structural unit>

In the embodiment, a structural unit (A-2) derived from an aliphatic diol is contained as the diol structural unit.

By containing a structural unit (A-2) derived from an aliphatic diol, the heat resistance and gas barrier properties of a bottle produced from the polyester are improved. A structural unit of a diol other than aliphatic diols (also referred to as a "diol other than aliphatic diols") may be present as the diol structural unit. Examples of the diol other than aliphatic diols include aromatic diols. Examples of the aliphatic diols include 2,2'-oxydiethanol, 2,2'-(ethylenedioxy)diethanol, 1,3-propanediol, 1,2-propanediol, 1,4-butanediol, 1,5-pentanediol, 1,6-hexanediol, 1,4-cyclohexanediol, 1,4-cyclohexane dimethanol, ethylene glycol, diethylene glycol, triethylene glycol and isosorbide. Examples of the aromatic diols include xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone and bis(4-β-hydroxyethoxyphenyl)sulfone. When a polyester resin (A) contains the diol structural unit of an aliphatic diol, exactly one kind of diol other than aliphatic diols may be contained, or two or more kinds of diols may be contained in any combination and with any ratio.

The polyester resin (A) preferably contains a structural unit (A-2) derived from ethylene glycol as a main diol structural unit. Specifically, a preferable ratio of the ethylene glycol structural unit to all, 100 mol% of, the diol structural units contained in the polyester resin (A) is usually 50 mol% or more, preferably 70 mol% or more, more preferably 80 mol% or more, further preferably 90 mol% or more, and particularly preferably 100 mol% from the viewpoint of improvement of heat resistance and gas barrier properties.

(Polyester resin (B))

<Dicarboxylic acid structural unit>

The polyester resin (B) contains a structural unit (B-1) derived from 2,5-furandicarboxylic acid as a dicarboxylic acid structural unit. By virtue of containing the structural unit (B-1) derived from 2,5-furandicarboxylic acid, a glass-transition temperature increases and heat resistance becomes satisfactory, and further gas barrier properties become satisfactory. The polyester resin (B) preferably contains the structural unit (B-1) derived from 2,5-furandicarboxylic acid as a main dicarboxylic acid unit. Specifically, a preferable ratio of the structural unit derived from 2,5-furandicarboxylic acid to all, 100 mol% of, the dicarboxylic acid structural units is usually 50 mol% or more, preferably 70 mol% or more, more preferably 80 mol% or more, and further preferably 90 to 100 mol%.

A structural unit of a dicarboxylic acid other than 2,5-furandicarboxylic acid (also referred to as a "dicarboxylic acid other than 2,5-furandicarboxylic acid") may be present as the dicarboxylic acid unit. Examples of the dicarboxylic acid other than 2,5-furandicarboxylic acid include aliphatic dicarboxylic acids and aromatic dicarboxylic acids. Examples of the aliphatic dicarboxylic acids include linear aliphatic dicarboxylic acids such as oxalic acid, succinic acid, glutaric acid, adipic acid, sebacic acid, dimer acid, and dodecanedioic acid; and alicyclic dicarboxylic acids such as 1,6-cyclohexanedicarboxylic acid. Examples of the aromatic dicarboxylic acid include terephthalic acid, isophthalic acid, naphthalene dicarboxylic acid and diphenyldicarboxylic acid. Of these dicarboxylic acids, an aliphatic dicarboxylic acid is preferable and a linear aliphatic dicarboxylic acid is more preferable since they are excellent in flexibility.

When a structural unit of a dicarboxylic acid other than 2,5-furandicarboxylic acid is contained as the dicarboxylic acid structural unit, structural units of exactly one kind of dicarboxylic acid other than 2,5-furandicarboxylic acid may be contained, or two or more kinds of structural units may be contained in any combination and with any ratio. When the polyester resin (B) contains a structural unit of a dicarboxylic acid other than 2,5-furandicarboxylic acid, the content thereof is preferably low from the viewpoint of easily and sufficiently obtaining the above effect produced by 2,5-furandicarboxylic acid structural unit contained therein. Whereas, the content is preferably high from the viewpoint of excellent flexibility. Then, when a structural unit of a dicarboxylic acid other than 2,5-furandicarboxylic acid is contained, the preferable ratio thereof to all, 100 mol% of, the total dicarboxylic acid structural units is usually 10 mol% or more, preferably 20 mol% or more, and further preferably 30 mol% or more, the upper limit of which is usually 50 mol%.

<Diol structural unit>

In the embodiment, a structural unit (B-2) derived from 1,2-ethanediol is contained as the diol structural unit. By containing the structural unit (B-2) derived from 1,2-ethanediol, the heat resistance and gas barrier properties of a bottle produced from the polyester are improved. A structural unit of a diol other than 1,2-ethanediol (also referred to as a "diol other than 1,2-ethanediol") may be present as the diol structural unit. Examples of the diol other than 1,2-ethanediol include aliphatic diols excluding 1,2-ethanediol and aromatic diols. Examples of the aliphatic diols excluding 1,2-ethanediol include 2,2'-oxydiethanol, 2,2'-(ethylenedioxy)diethanol, 1,3-propanediol, 1,2-propanediol, 1,4-butanediol, 1,5-pentanediol, 1,6-hexanediol, 1,4-cyclohexanediol, 1,4-cyclohexane dimethanol, ethylene glycol, diethylene glycol, triethylene glycol and isosorbide. Examples of the aromatic diols include xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone and bis(4-β-hydroxyethoxyphenyl)sulfone. When a polyester resin (B) contains a structural unit of a diol other than 1,2-ethanediol, exactly one kind of diol other than 1,2-ethanediol may be contained, or two or more kinds of diols may be contained in any combination and with any ratio.

The polyester resin (B) preferably contains a structural unit (B-2) derived from 1,2-ethanediol as a main diol structural unit. Specifically, a preferable ratio of the 1,2-ethanediol structural unit to all, 100 mol% of, the diol structural units contained in the polyester resin (B) is usually 50 mol% or more, preferably 70 mol% or more, more preferably 80 mol% or more, further preferably 90 mol% or more, and particularly preferably 100 mol% from the viewpoint of improvement of heat resistance and gas barrier properties.

(Other copolymerizable components of a polyester resin (A) and other copolymerizable components of polyester resin (B))

The polyester resin (A) and polyester resin (B) may contain a structural unit derived from copolymerizable components other than a dicarboxylic acid and a diol. Examples of the copolymerizable components include compounds having three or more functional groups.

Examples of the compounds having three or more functional groups include polyhydric alcohols having three or more functional groups, poly-carboxylic acids having three or more functional groups (or anhydrides, acid chlorides, or lower alkyl esters thereof), hydroxycarboxylic acids having three or more functional groups (or anhydrides, acid chlorides, or lower alkyl esters thereof) and amines having three or more functional groups.

Examples of the polyhydric alcohol having three or more functional groups include glycerin, trimethylolpropane and pentaerythritol. Exactly one of these may be used singly, or two or more of these may be used in any combination and with any ratio.

Examples of the poly-carboxylic acid having three or more functional groups or anhydride thereof include trimesic acid, propanetricarboxylic acid, trimellitic anhydride, pyromellitic anhydride, benzophenone tetracarboxylic anhydride and cyclopentatetracarboxylic anhydride. Exactly one of these may be used singly, or two or more of these may be used in any combination and with any ratio.

Examples of the hydroxycarboxylic acid having three or more functional groups include malic acid, hydroxyglutaric acid, hydroxymethylglutaric acid, tartaric acid, citric acid, hydroxyisophthalic acid and hydroxyterephthalic acid. Exactly one of these may be used singly, or two or more of these may be used in any combination and with any ratio.

When a polyester resin (A) or a polyester resin (B) contains a structural unit derived from a compound having three or more functional groups, the content thereof is preferably high from the viewpoint of easily improving strain hardenability, or preferably low from the viewpoint of appropriately proceeding crosslinking of polyester according to the embodiment, stably and easily taking out a strand and becoming satisfactory moldability and mechanical properties. Then, the content thereof to all, 100 mol% of, the structural units constituting a polyester is usually 5 mol% or less, particularly 4 mol% or less, and particularly preferably 3 mol% or less; A binary system polyester not containing any other copolymerizable components is most preferable.

<Chain extender>

In producing a polyester resin (A) or a polyester resin (B), a chain extender such as a carbonate compound, a diisocyanate compound, a dioxazoline and a silicate ester may be used. For example, a carbonate compound such as diphenyl carbonate is used in a manner of satisfying a ratio of preferably 20 mol% or less and more preferably 10 mol% or less to all, 100 mol% of, the structural units of polyester. In this manner, a polyester carbonate can be obtained.

Examples of the carbonate compound herein include diphenyl carbonate, ditolyl carbonate, bis(chlorophenyl)carbonate, m-cresyl carbonate, dinaphthyl carbonate, dimethyl carbonate, diethyl carbonate, dibutyl carbonate, ethylene carbonate, diamyl carbonate and dicyclohexyl carbonate. Other carbonate compounds of homogeneous or different kinds of hydroxy compounds, derived from hydroxy compounds such as phenols and alcohols, can be used.

Examples of the diisocyanate compound include diisocyanates commonly known in the technical field, such as 2,4-tolylene diisocyanate, a mixture of 2,4-tolylene diisocyanate and 2,6-tolylene diisocyanate, diphenylmethane diisocyanate, 1,5-naphthylene diisocyanate, xylylene diisocyanate, hydrogenated xylylene diisocyanate, hexamethylene diisocyanate and isophorone diisocyanate.

Examples of the silicate ester include tetramethoxysilane, dimethoxydiphenylsilane, dimethoxydimethylsilane and diphenyldihydroxylane. Exactly one of these may be used singly, or two or more of these may be used in any combination and with any ratio.

<Endcapping agent>

In the embodiment, the end group of polyester may be endcapped with, e.g., carbodiimide, an epoxy compound, a monofunctional alcohol or a carboxylic acid. When an endcapping agent is used, the content thereof to all, 100 mol% of, the structural units of the polyester is preferably 20 mol% or less, and more preferably 10 mol% or less.

Examples of the carbodiimide compound serving as the endcapping agent herein include compounds having one or more carbodiimide groups (including polycarbodiimide compounds) in a molecule thereof. Examples of a monocarbodiimide compound include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-$\beta$-naphthylcarbodiimide and N,N'-di-2,6-diisopropylphenylcarbodiimide. Exactly one of these may be used singly, or two or more kinds of these may be used in any combination and with any ratio. Note that, for producing the polyester according to the embodiment, similarly to a polyester composition (described later) according to the embodiment, various kinds of additives such as a heat stabilizer, an antioxidant, a hydrolysis inhibitor, a crystal nucleating agent, a flame retardant, an antistatic agent, a release agent and a UV absorber may be used as long as the properties thereof are not impaired.

(Raw material for polyester resin (A) and raw material for polyester resin (B))

The raw materials for use in producing a polyester resin (A) and a polyester resin (B) may be materials derived from petroleum or materials derived from biomass. From the viewpoint of environmental protection, a material derived from biomass is preferably used, and more preferably used as a main structural unit. Examples of the material derived from biomass include dicarboxylic acid components such as 2,5-furandicarboxylic acid, succinic acid, glutaric acid, adipic acid, sebacic acid, and diol components such as 1,3-propanediol, 1,4-butanediol and 1,2-ethanediol.

(Physical properties of polyester resin (A))

A polyester resin (A) preferably has an intrinsic viscosity (measured by the following method) of 0.60 dl/g or more and 1.30 dl/g or less. In addition, the glass-transition temperature thereof is preferably 50°C or more and 150°C or less. A polyester compound (0.25 g), dissolved in 50 ml of a mixed solvent of phenol/1,1,2,2-tetrachloroethane = 50/50 (weight ratio), is measured at 30°C using an Ubbelohde viscometer, wherein the Huggins constant is set to 0.32.

<Intrinsic viscosity>

A polyester resin (A) has an intrinsic viscosity of particularly preferably 0.70 dl/g or more, especially preferably 0.75 dl/g or more, and most preferably 0.80 dl/g or more. Whereas, the intrinsic viscosity is preferably 1.50 dl/g or less and more preferably 1.30 dl/g or less. That is, the intrinsic viscosity of a polyester resin (A) is preferably 0.70 dl/g or more and 1.50 dl/g or less. The intrinsic viscosity, falling within the above range, makes the polyester resin suitable for molding bottles and films.

<Glass-transition temperature (Tg)>

The glass-transition temperature of a polyester resin (A) is preferably 50°C or more and 150°C or less. The glass-transition temperature is more preferably 60°C or more. Whereas, the glass-transition temperature is more preferably 130°C or less. The glass-transition temperature of polyester falling within the above range, even when an effervescent liquid such as carbonated water is contained in a bottle, produces resistance to deformation of the bottle caused by difference in pressure inside and outside and resistance to deformation of the bottle kept under a high-temperature environment. The glass transition temperature can be measured by the method of JIS K7121-1987 using a differential scanning calorimeter. Specifically, the temperature of polyester, starting at 25°C, is increased to the melting point +30 to 60°C, then decreased to 25°C, and again increased to the melting point +30 to 60°C. Herein, the rate of increasing and decreasing the temperature is set to 10°C/minute. The midpoint glass transition temperature during the second temperature-increasing step is determined as the glass-transition temperature.

(Physical properties of polyester resin (B))

A polyester resin (B) preferably has an intrinsic viscosity of 0.70 dl/g or more and 1.50 dl/g or less. In addition, the glass-transition temperature thereof is preferably 50°C or more and 150°C or less.

<Intrinsic viscosity>

A polyester resin (B) has an intrinsic viscosity of particularly preferably 0.70 dl/g or more, especially preferably 0.80 dl/g or more, and most preferably 1.00 dl/g or more. Whereas, the intrinsic viscosity is preferably 1.50 dl/g or less and more preferably 1.30 dl/g or less. That is, the intrinsic viscosity of a polyester resin (B) is preferably 0.70 dl/g or more and 1.50 dl/g or less. The intrinsic viscosity falling within the above range can produce the polyester excellent in both stretch moldability and creep resistance. The intrinsic viscosity falling within the above range facilitates production of a molded object having excellent strain hardenability, less thickness variation, and satisfactory creep resistance and impact resistance. Since uniformly thinning with less thickness variation is practical, the use of a polyester resin (B) makes it possible to reduce the weight of bottles and reduce environmental load. In addition, extrusion in molding can be easily made without applying high pressure.

The reason why strain hardening of polyester is easily caused by high intrinsic viscosity, is presumably as follows. Strain hardening is a phenomenon where the viscosity of a resin increases further than a linear viscosity thereof, depending on the stretching speed. Usually in the stretching process, stress is applied concentratedly to a thinned site, so that deformation proceeds and thickness variation is likely to spread. However, a polymer having strain hardenability tends to be uniform in thickness since the viscosity of a thinned site reduced in thickness increases even in stretch. Thus, the polymer is suitable for a stretch molding process.

<Glass-transition temperature (Tg)>

The glass-transition temperature of a polyester resin (B) is preferably 50°C or more and 150°C or less. The glass-transition temperature is more preferably 60°C or more. Whereas, the glass-transition temperature is more preferably 130°C or less. The glass-transition temperature of polyester falling within the above range, even when an effervescent liquid such as carbonated water is contained in a bottle, makes the bottle rarely deformed by difference in pressure inside and outside and, even when the bottle is kept under a high-temperature environment, also makes the bottle rarely deformed.

As a method for producing the polyester of the embodiment, a known method for producing a polyester resin can be employed. As the reaction conditions herein, appropriate conditions conventionally employed can be used. The reaction conditions are not particularly limited.

Specifically, production can be made by performing an esterification reaction or transesterification reaction step using a dicarboxylic acid component containing 2,5-furandicarboxylic acid as an essential component, an aliphatic diol component preferably containing 1,2-ethanediol, and other copolymerizable components to be used where appropriate, followed by a polycondensation reaction step. Note that, the esterification reaction or transesterification reaction step and polycondensation reaction step are collectively referred to also as a polyester production step. In the reaction, a chain extender and an endcapping agent as mentioned above may be used where appropriate. From the viewpoint of increasing the intrinsic viscosity, it is preferable to further perform the solid phase polymerization step after performing the polycondensation reaction step in the polyester production step.

(Blending ratio between polyester resin (A) and polyester resin (B) in masterbatch for molding bottle)

In the masterbatch according to the embodiment, the proportion of a polyester resin (B), determined by (Mathematical Formula 1), is 90 mass% or less. Instead of using the masterbatch, it is conceivable that a polyester resin (A) and a polyester resin (B) may be blended and molded to attain the proportion of the polyester resin (B) in the blend-molded object equal to a desired proportion. However, when, for example, a PET resin (100%) is used as a polyester resin (A) and molded to obtain a preform, blending and molding the polyester resin (A) and a polyester resin (B) during the period equal to the cycle time (hereinafter, referred to as the standard cycle time), in consideration of ensuring productivity and quality, causes insufficient compatibilization of polyester resin (A) and polyester resin (B). Consequently, whitening of the exterior of the preform occurs. When the cycle time is increased, to be longer than the standard cycle time, for the sake of controlling the whitening of a preform, the productivity of the preform decreases. To solve such a problem, the masterbatch and polyester resin (A) are blended and molded to attain the proportion of the polyester resin (B) in the blend-molded object to a desired proportion. However, in the masterbatch according to the embodiment, when the proportion of the polyester resin (B), determined by (Mathematical Formula 1), is more than 90 mass%, whitening is observed in the exterior of the preform formed by blend-molding during a standard cycle time and sufficient transparency cannot be obtained. By virtue of the proportion of a polyester resin (B), determined by the formula (Mathematical Formula 1), of 90 mass% or less, the cycle time can be reduced. By virtue of the proportion of 70 mass% or less, it is practical to obtain a molded object containing a polyester resin (A) and a polyester resin (B) by sufficient compatibilization under the molding condition and during cycle time for molding a PET resin (1000).

In the masterbatch according to embodiment, the proportion of a polyester resin (B), determined by (Mathematical Formula 1), is preferably 45 mass% or more. It is practical to achieve both high productivity and high quality of the molded object. Even when the proportion of a polyester resin (B), determined by (Mathematical Formula 1), is less than 45 mass%, it is possible to obtain a molded object having a polyester resin (A) and a polyester resin (B) by sufficient compatibilization during the cycle time same as that of the molding conditions of a PET resin (100%). However, in blending and molding the masterbatch and the polyester resin (A), the blending ratio of the masterbatch must be increased by decreasing the blending ratio of the polyester resin (A); therefore, a large amount of masterbatch must be prepared and the burden of inventory management increases. As a result, the production efficiency of a preform may decrease.

When a film is formed, similarly to molding a preform, the use of the masterbatch promotes compatibilization of a polyester resin (A) and a polyester resin (B) and can avoid whitening of the film. The proportion of a polyester resin (B) in a masterbatch is preferably 45 to 90 wt%, further preferably 45 to 80 wt%, and more preferably 45 to 70 wt%. In regards to the proportion falling within the above range, when the proportion is lower than the range, the proportion of a polyester (B) is low, with the result that it becomes difficult to increase the proportion of the polyester (B) in a film. Desired physical properties may not be achieved. When the content is higher than the range, sufficient transparency may not be obtained.

In the masterbatch according to the embodiment, the intrinsic viscosity (IV value), measured under (Condition 1), is preferably 0.50 dl/g or more and 1.20 dl/g or less.

(Condition 1) a 0.25 g portion of the masterbatch, dissolved in 50 ml of a mixed solvent of phenol/1,1,2,2-tetrachloroethane = 50/50 (weight ratio), is measured at 30°C using an Ubbelohde viscometer, wherein the Huggins constant is set to 0.32. When the intrinsic viscosity (IV value) measured under (Condition 1), is less than 0.50 dl/g, the mechanical properties of a molded object may be insufficient. On the other hand, when the intrinsic viscosity (IV value) is more than 1.20 dl/g, molding may be difficult.

The masterbatch according to the embodiment may be used for molding a pressure-resistant bottle, a bottle for vending a hot product therein or a heat-resistant bottle. A receptacle obtained by molding a blend of a PEF resin with a PET resin is expected to have high mechanical strength and barrier properties and thus, suitable for a pressure-resistant bottle, a bottle for vending a hot product therein or a heat-resistant bottle. However, when the compatibility is insufficient, whitening occurs in the exterior. To obtain a receptacle whose quality of being transparent is appreciated, avoiding whitening is preferable. When a container is molded by blending a PEF resin with a PET resin using the masterbatch according to the embodiment, transparency can be attained in the molding time same as that of a PET resin.

The masterbatch according to the embodiment can satisfy a proportion of a polyester resin (B), determined by (Mathematical Formula 1), of 90 mass% or less and can contain a thermoplastic resin other than a polyester resin (A) and a polyester resin (B) as long as compatibility is not affected. However, from the viewpoint of ensuring the content of a polyester resin (B) for a blow-molded bottle, the total mass of a polyester resin (A) and a polyester resin (B) based on the total mass of the masterbatch is 50% or more, preferably 80% or more, and further preferably 100%.

<Thermoplastic resin other than polyester resin (A) and polyester resin (B) contained in masterbatch>

Examples of a thermoplastic resin (hereinafter, referred to as a different thermoplastic resin 1) other than a polyester resin (A) and a polyester resin (B) contained in masterbatch include, a polyester (hereinafter, referred to as a different polyester 1) other than a polyester resin (A) and a polyester resin (B), a crosslinkable thermoplastic resin, acryl and polycarbonate. Of these, at least one of the different polyester 1 or a crosslinkable thermoplastic resin is preferable from the viewpoint of e.g., excellent strain hardenability. Exactly one kind of different thermoplastic resin 1 may be used, or two or more kinds of different thermoplastic resins 1 may be used in any combination and with any ratio.

<Another polyester 1>

The different polyester 1 is a polyester containing a structural unit derived from a diol and a structural unit derived from a dicarboxylic acid, and is a polyester other than a polyester resin (A) and a polyester resin (B). Examples of the dicarboxylic acid containing a dicarboxylic acid unit that the different polyester includes, include o-phthalic acid, isophthalic acid, succinic acid, adipic acid, sebacic acid, azelaic acid, octylsuccinic acid, cyclohexanedicarboxylic acid, naphthalene dicarboxylic acid, fumaric acid, maleic acid, itaconic acid, decamethylene carboxylic acid, and anhydrides and lower alkyl esters thereof.

Whereas, examples of a diol constituting a diol unit that the different polyester 1 includes, include aliphatic diols including linear diols such as 1,3-propanediol, 1,4-butanediol, diethylene glycol, 1,5-pentanediol, 1,6-hexanediol, dipropylene glycol, triethylene glycol, tetraethylene glycol, 1,2-propanediol, 1,3-butanediol, 2,3-butanediol, neopentyl glycol (2,2-dimethylpropane-1,3-diol), 1,2-hexanediol, 2,5-hexanediol, 2-methyl-2,4-pentanediol, 3-methyl-1,3-pentanediol, 2-ethyl-1,3-hexanediol and polytetramethylene glycol; and cyclic diols such as 1,4-cyclohexanediol, 1,4-cyclohexane dimethanol, 2,2-bis(4-hydroxycyclohexyl)propane and alkylene oxide adduct of 2,2-bis(4-hydroxycyclohexyl)propane.

<Crosslinkable thermoplastic resin>

Strain hardenability can be improved also by combination use of a crosslinkable thermoplastic resin having a functional group that can react with a carboxyl group or a hydroxyl group contained in a masterbatch. Examples of the functional group that can react with a carboxyl group or a hydroxyl group include an epoxy group, an oxazoline group, a carboxyl group and a carbodiimide group. These functional groups are preferably present in a side chain of a thermoplastic resin. When these functional groups are present in a side chain, a branched structure is formed, relaxation against stretching of a molecule during stretch molding is delayed, and strain hardenability is improved.

Note that, a thermoplastic resin other than a polyester resin (A) and a polyester resin (B), for being contained in a masterbatch, may not be added to a masterbatch but added to a blend of the masterbatch and the polyester resin (A) in forming a preform by molding and blend together.

<Additives to be added to masterbatch>

In producing a masterbatch, as long as the characteristics of the masterbatch are not impaired, various additives such as a heat stabilizer, an antioxidant, a hydrolysis inhibitor, a crystal nucleating agent, a flame retardant, an antistatic agent, a release agent and a UV absorber may be used.

These additives may be added to a reactor before a polymerization reaction of polyester, to a conveyance device or the like in the interval between initiation and completion of the polymerization reaction, or before taking out a product following the polymerization reaction. Alternatively, the additives may be added to the product after taking out the product.

In producing a masterbatch, not only various additives mentioned above but also, e.g., an impact modifier, a crystal nucleating agent, a strengthener, a bulking agent and a bluing agent may be added to the masterbatch and then subjected to molding. When additives are used, exactly one kind of additive may be used singly, or two or more kinds of additives may be used in any combination and with any ratio.

Note that, additives, an impact modifier, a crystal nucleating agent, a strengthener, a bulking agent and a bluing agent, etc., may not be added to a masterbatch but added to a blend of the masterbatch and a polyester resin (A) and blended together to form a preform.

<Impact resistance modifier>

A masterbatch may contain an impact resistance modifier in consideration of the following formation of a preform. By containing an impact resistance modifier, satisfactory mechanical properties of a preform can be obtained. When an impact resistance modifier is contained, the content thereof is preferably 0.01 wt% or more and 10 wt% or less, based on the mass of a preform. Examples of the impact resistance modifier include a butadiene rubber, an acrylic rubber and a silicone-acryl composite rubber. Of the impact resistance modifiers, a core-shell type of impact resistance modifiers such as METABLEN (manufactured by Mitsubishi Chemical Corporation) and KANE ACE (manufactured by Kaneka Corporation) are suitably used.

In producing a masterbatch, a filler may be used. The filler may be inorganic or organic. The content of a filler may be selected from the range where the additive effect of the filler can be sufficiently obtained and tensile elongation and impact resistance of a preform can be kept up, based on a preform. Examples of the inorganic filler include, anhydrous silica, mica, talc, titanium oxide, calcium carbonate, diatomaceous earth, allophane, bentonite, potassium titanate, zeolite, sepiolite, smectite, kaolin, kaolinite, glass, limestone, carbon, wollastonite, fired perlite, a silicate such as calcium silicate or sodium silicate, aluminum oxide, magnesium carbonate a hydroxide such as calcium hydroxide, a salt such as ferric carbonate, zinc oxide, iron oxide, aluminum phosphate or barium sulfate.

Regarding a preform containing an inorganic filler, the content of the inorganic filler in the preform is usually 1 wt% or more, preferably 3 wt% or more, and further preferably 5 wt% or more. Whereas, the content is usually 80 wt% or less, preferably 70 wt% or less and further preferably 60 wt% or less.

Examples of the organic filler include raw starch, processed starch, pulp, chitin and chitosan, and powder such as coconut shell powder, bamboo powder, bark powder, kenaf powder and straw powder. In addition, a cellulose nanofiber obtained by defiberizing a fiber such as pulp up to a nano level, is also mentioned.

Regarding a preform containing an organic filler, the content of the organic filler in the preform is usually 0.1 wt% or more and preferably 1 wt% or more. The content is usually 70 wt% or less and preferably 50 wt% or less.

Examples of the crystal nucleating agent include glass fiber, carbon fiber, titanium whisker, mica, talc, boron nitride, $CaCO_3$, $TiO_2$, silica, lamellar silicate, polyethylene wax and polypropylene wax. Talc, boron nitride, silica, lamellar silicate, polyethylene wax and polypropylene wax are preferable. Of them, talc is preferable.

Note that, e.g., an inorganic filler, which is added for improving the rigidity of a preform, and an organic stabilizer, which is added as a heat stabilizer, may contribute to the promotion of crystallization. Foreign matters such as inorganic matter or organic matter, which are contaminants mixed in a polyester production process or molding process, can also serve as a crystal nucleating agent. Accordingly, the crystal nucleating agent used in the specification refers to a particle that contributes to the promotion of crystallization and is in a solid state at normal temperature.

The particle size of a crystal nucleating agent is preferably small. The particle size of a crystal nucleating agent is preferably 5 um or less, more preferably 3 um or less, further preferably 1 um or less, and most preferably 0.5 um or less. Note that, the lower limit of the particle size of a crystal nucleating agent is usually 0.1 $\mu$m.

When a crystal nucleating agent is used for producing a preform, the amount of the crystal nucleating agent is preferably 0.001 wt% or more, more preferably 0.01 wt% or more, and further preferably 0.1 wt% or more, compared to the mass of the preform. The upper limit of the amount of a crystal nucleating agent is preferably 30 wt%, more preferably 10 wt%, still more preferably 5 wt%, and particularly preferably 1 wt%, compared to the mass of the preform. When the amount of a crystal nucleating agent falls within the above range, the crystallization promotion effect is easily produced and mechanical properties and flexibility, etc., of a preform tend to be obtained.

<Bluing agent>

A masterbatch may further contain a bluing agent. By virtue of containing a bluing agent, a value, represented by b*, of a formed bottle is easily controlled to be 2 or less.

[Method for Producing Masterbatch]

For producing the masterbatch of the embodiment, a commonly known method can be employed. For example, the masterbatch can be produced by melt-kneading all raw materials and pelletizing a mixture thereof by, e.g., a single- or twin- screw extruder or the Banbury mixer.

<Method for identifying composition>

The composition of a masterbatch can be identified by a conventionally known method. For example, the composition can be identified by separating the composition into constitutional components by HPLC (high performance liquid chromatography), and analyzing each of the components by NMR (nuclear magnetic resonance spectroscopy) or individually decomposing the components with methanol and analyzing each of them by, e.g., GC/MS (gas chromatography-mass spectrometry).

[Preform]

The preform according to the embodiment is a preform for a bottle formed of a resin composition containing a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, and having a proportion of a polyester resin (B), determined by (Mathematical Formula 1), of 5 to 25 mass%. In the preform, an intrinsic viscosity (IV value), measured under (Condition 2), is 0.65 dl/g or more and 1.00 dl/g or less and a haze, measured in accordance with JIS K 7136: 2000 "Plastics-Determination of haze for transparent materials" except that a light flux is focused on a 7.0 mm-square, is 0.1 to 8.0%. The proportion of a polyester resin (B), determined by (Mathematical Formula 1), is preferably 5 to 15 mass%, and more preferably 5 to 10 mass%. The intrinsic viscosity (IV value), measured under (Condition 2), is preferably 0.65 dl/g or more and 0.95 dl/g or less, and more preferably 0.70 dl/g or more and 0.90 dl/g or less. The haze is preferably 0.1 to 6.0%, and more preferably 0.1 to 3.0%.

(Mathematical Formula 1) Proportion of polyester resin (B) (mass%) = content of polyester resin (B)/(content of polyester resin (A) + content of polyester resin (B))

(Condition 2) a 0.25 g sample, cut out from the preform and then dissolved in 50 ml of a mixed solvent of phenol/1,1,2,2-tetrachloroethane = 50/50 (weight ratio), is measured at 30°C using an Ubbelohde viscometer, wherein the Huggins constant is set to 0.32.

Herein, in a method for producing a molded object according to the embodiment, the masterbatch is a masterbatch in which the proportion of a polyester resin (B), determined by (Mathematical Formula 1), is 45 mass% to 90 wt%; and a step of forming the molded object is a step of forming a preform for a bottle by blending the masterbatch and the polyester resin (A).

Specifically, in injection molding, a masterbatch according to the embodiment, a polyester resin (A) and additives, where appropriate, are directly melted and kneaded, subsequently injected in a mold in a molten state, cooled and taken out to form a preform. In the embodiment, since a pellet containing a polyester resin (A) and a polyester resin (B) already blended therein as a masterbatch and a pellet of a polyester resin (A) are used as raw materials for molding, even regarding a preform formed by directly melting and kneading the raw materials during injection molding using an injection molding machine equipped with a twin screw, the polyester resin (A) and the polyester resin (B) in the preform are already and sufficiently compatibilized. The temperature of a resin during the extrusion step of the embodiment is not particularly limited but it is usually 210 to 290°C, and particularly preferably falls within the range of 230 to 270°C from the viewpoint of moldability and control of heat deterioration. Process time of melt-kneading by, for example, an injection molding machine equipped with a twin screw, is 120 seconds or more and 300 seconds or less, which corresponds to the time taken by passing a kneaded material along the twin screw to form a preform. Thus, in a method for producing a preform according to the embodiment, it is practical to form a preform kept from whitening by compatibilizing resins during the time same as the cycle time for forming a PET preform.

[Blow-Molded Bottle]

The blow-molded bottle according to the embodiment is a blow-molded bottle formed of a resin composition containing a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, and having a proportion of the polyester resin (B), determined by (Mathematical Formula 1), of 5 to 25 mass%. In the blow-molded bottle, the intrinsic viscosity (IV value), measured under (Condition 3), is 0.65 dl/g or more and 1.00 dl/g or less, and a haze, measured in accordance with JIS K 7136: 2000 "Plastics-Determination of haze for transparent materials" except that a light flux is focused on a 7.0 mm-square, is 0.1 to 20%. The proportion of a polyester resin (B), determined by (Mathematical Formula 1), is preferably 5 to 15 mass%, and more preferably 5 to 10 mass%. The intrinsic viscosity (IV value), measured under (Condition 3), is preferably 0.65 dl/g or more and 0.95 dl/g or less, and more preferably 0.70 dl/g or more and 0.90 dl/g or less. The haze is preferably 0.1~10.0%, more preferably 0.1-5.0%.

(Mathematical Formula 1) Proportion of polyester resin (B) (mass%) = content of polyester resin (B)/(content of polyester resin (A) + content of polyester resin (B))

(Condition 3) a 0.25 g sample, cut out from the blow-molded bottle and then dissolved in 50 ml of a mixed solvent of phenol/1,1,2,2-tetrachloroethane = 50/50 (weight ratio), is measured at 30°C using an Ubbelohde viscometer, wherein the Huggins constant is set to 0.32.

Herein, the method for producing a blow-molded bottle according to the embodiment includes a step of forming a bottle by blow-molding of a preform obtained by the method for producing a molded object according to the embodiment.

Specifically, in the blow-molding step, a preform is put into a mold heated to a predetermined temperature by a heater, having a desired cavity shape, and is fit into the mold by blowing high-pressure air to form a bottle. The heating temperature of the preform is preferably 90°C to 150°C, more preferably 100°C to 140°C, and particularly preferably 110 to 130°C. The thickness of a bottle can be made uniform by heating the preform with the temperature within the above range and blowing high-pressure air.

The blow-molded bottle according to the embodiment is preferably a pressure-resistant bottle for filling a carbonated liquid. The blow-molded bottle according to the embodiment is excellent in pressure resistance and heat resistance and thus suitable for filling a carbonated liquid.

The blow-molded bottle according to the embodiment is preferably a bottle for being filled with hot beverage, or a bottle for vending a hot product therein or a heat-resistant bottle for filling at a high temperature. The blow-molded bottle according to the embodiment is excellent in heat resistance and as high gas barrier properties, and thus, deformation of the receptacle in vending a hot product therein is avoided. As a result, the degree of freedom of the receptacle design is high and receptacle weight reduction and $CO_2$ emission reduction can be realized. In addition, recyclability thereof is improved.

A beverage product according to the embodiment is characterized in that the molded bottle according to the present embodiment is filled with a beverage.

A blow-molded bottle may have various shapes depending on the shape of used mold. The shape of a blow-molded bottle is not particularly limited. In regards to a bottle for a beverage, the bottle may have any shape as long as a beverage can be held. In particular, an appropriate molded bottle shape having a uniform and sufficiently thick wall is suitable for carbonated beverages such as beer and champagne; and hot beverages such as tea and coffee.

When a bottle is filled with one of these liquids and the mouth of the bottle is sealed with usually with, e.g., a resin cap, the inner pressure of the bottle becomes higher than the outer pressure. Then, bottles having a high inner pressure are packed in a box transported and displayed at stores while being kept upright. Accordingly, the shape of the bottle bottom is preferably pressure-resistant from the viewpoint of avoiding deformation due to inner pressure. Deformation of the bottom and body of a bottle is generally accompanied by a creep phenomenon (irreversible deformation caused by continuous application of stress). Because of this, there is a commonality in the wall thickness and shape suitable for these bottles. Therefore, hereinafter, a bottle used for filling a carbonated liquid, a hot beverage, or the like may be referred to as a "heat-resistant bottle". Specifically, the blow-molded bottle of the embodiment is suitable as a heat/pressure-resistant bottle.

Examples of the pressure-resistant shape that can be used for the bottom of a heat/pressure-resistant bottle include a petaloid shape, a dome shape protruding inward, so-called a champagne-bottom shape and a shape having bumps and dips at the center of the bottom surface. When the average wall thickness is large, deformation and burst of a bottle due to inner pressure rarely occur. Specifically, the average wall-thickness of a bottle body, which varies depending on the inner pressure, is preferably 0.20 mm or more, more preferably 0.25 mm or more, and further preferably 0.30 mm or more. Whereas, the average wall thickness is preferably 0.70 mm or less from the viewpoint of moldability of a bottle.

Since difference in wall thickness of the blow-molded bottle according to the embodiment is small, the thickness can be uniformly reduced. Consequently, a light-weight heat/pressure-resistant bottle can be obtained. Specifically, bottle weight/interior content is preferably 10 g/L or more, more preferably 20 g/L or more, further preferably 30 g/L or more, and particularly preferably 50 g/L or more, whereas, the bottle weight/interior content is preferably 200 g/L or less, more preferably 150 g/L or less and particularly preferably 120 g/L or less.

The blow-molded bottle according to the embodiment is a bottle having excellent gas barrier properties and a uniformly thin wall. Thus, the bottle is particularly suitable as a pressure-resistant bottle for filling a carbonated liquid such as a carbonated beverage. In addition, the blow-molded bottle according to the embodiment has excellent creep resistance and impact resistance in a state of being filled with a carbonated liquid. Specifically, the blow-molded bottle is preferable as a bottle for filling a liquid containing 1~10 GV carbon dioxide gas, more preferable as a bottle for filling a liquid containing 1~5 GV carbon dioxide gas, still more preferable as a bottle for filling a liquid containing 1~3 GV carbon dioxide gas, and particularly preferable as a bottle for filling a liquid containing 1~2 GV carbon dioxide gas.

The blow-molded bottle according to the embodiment has excellent oxygen barrier properties. The blow-molded bottle according to the embodiment is suitable as a bottle for an alcoholic beverage, such as a wine bottle. Particularly, the blow-molded bottle according to the embodiment is superior in gas barrier properties to conventional PET bottles for alcoholic beverages. Because of this, the shelf life of the blow-molded bottle can be extended without providing any other means for improving gas barrier properties, such as multilayer molding and coating. When a resin composition for forming the blow-molded bottle according to the embodiment has a glass-transition temperature of 50°C or more, pressure difference between inside and outside rarely causes deformation of the bottle, and thus the resin composition is suitable for filling an effervescent substance such as a carbonated beverage. Since the blow-molded bottle according to the embodiment is rarely deformed under a high temperature environment, the bottle is suitable as a pressure-resistant bottle for being filled with a beverage at a high temperature and a bottle for vending a hot product e.g., a hot beverage therein.

In the embodiment, a preform kept from whitening can be obtained, although a cycle time thereof is the same as that of forming the preform for a PET bottle, and a bottle obtained by further blow-molding the preform is also kept from whitening.

[Film]

The film according to the embodiment is a film formed of a resin composition containing a polyester resin (A) containing a structural unit (A-1) derived from terephthalic acid and a structural unit (A-2) derived from an aliphatic diol, and a polyester resin (B) containing a structural unit (B-1) derived from a 2,5-furandicarboxylic acid and a structural unit (B-2) derived from 1,2-ethanediol, and having a proportion of the polyester resin (B), determined by (Mathematical Formula 1), of 1 to 90 mass%. In the film, the intrinsic viscosity (IV value), measured under (Condition 4), is 0.50 dl/g or more and 1.00 dl/g or less, and a haze, measured in accordance with JIS K 7136: 2000 "Plastics-Determination of haze for transparent materials" except that a light flux is focused on a 7.0 mm-square, is 0.01 to 6.0%. Note that, in the embodiment, examples of the "film" include a product generally called as a "sheet".

Proportion of polyester resin (B) (mass%) = content of polyester resin (B)/(content of polyester resin (A) + content of polyester resin (B))    (Mathematical Formula 1)

(Condition 4) a 0.25 g sample, cut out from the film and then dissolved in 50 ml of a mixed solvent of phenol/1,1,2,2-tetrachloroethane = 50/50 (weight ratio), is measured at 30°C using an Ubbelohde viscometer, wherein the Huggins constant is set to 0.32.

The proportion of a polyester resin (B) in a film is preferably 1 to 90 mass%, more preferably 20 to 90 mass%, and most preferably 40 to 90 mass%. By virtue of the proportion falling within the above range, it is possible to obtain a film having high transparency, high gas barrier properties and a high surface hardness.

The haze of a film is preferably 0.01 to 6.0%, further preferably 0.01 to 4.5%, and most preferably 0.01 to 1.5%. By virtue of the haze falling within the above range, the film can be suitably used in applications requiring high transparency, such as optical applications.

Herein, the method for producing a film according to the embodiment includes a step of forming a film by blending the masterbatch according to the embodiment with a polyester resin (A). Specifically, in injection molding, the masterbatch according to the embodiment, a polyester resin (A) and additives used where appropriate, are directly melt-kneaded, subsequently injected in a mold in a molten state and cooled to form a film. In the embodiment, since a pellet of a masterbatch containing a polyester resin (A) and a polyester resin (B), which are already blended, and a pellet of the polyester resin (A) are used as raw materials for molding, even regarding a film formed by directly melt-kneading the raw materials using an extruder equipped with a twin-screw, the polyester resin (A) and the polyester resin (B) are already sufficiently compatibilized in the film. The resin temperature of the extrusion step is not particularly limited but the preferable temperature usually falls within the range of 200 to 300°C and particularly falls within the range of 240 to 280°C, from the viewpoint of moldability and control of heat deterioration.

The film according to the present embodiment can also be biaxially stretched to obtain a biaxially stretched film excellent in mechanical properties.

As a method for producing a biaxially stretched film, a conventionally known method can be used. Examples of the method are as follows.

The masterbatch and other materials are used. A molten film extruded from a die is cooled and solidify by a cooling roll to obtain an unstretched film. In this regard, it is necessary to enhance the adhesion between the film and the rotary cooling drum in order to improve the flatness of the resultant film. An electrostatic application contact method and/or a liquid application adhesion method are preferably employed. Subsequently, the unstretched film is biaxially stretched. In this regard, first, the unstretched film is stretched in one direction by a roll or a tenter-system stretching machine. The temperature of a stretching process is usually 80 to 140°C, and preferably 85 to 120°C. The stretch ratio is usually 2.5 to 7 and preferably 3.0 to 6. Then, the film is stretched, in a direction perpendicular to the direction of the first stretching step, at a temperature of usually 70 to 170°C, and the stretch ratio is usually 3.0 to 7 and preferably 3.5 to 6. Subsequently, a heat treatment is performed at a temperature of 160 to 240°C under tension or under relaxation of 30% or less to obtain a biaxially stretched film. In the stretching process, a method of two or more steps of uniaxial stretching can be employed. In this regard, the method is preferably performed such that the stretch ratios in the two directions each finally fall within the above range.

A simultaneous biaxial stretching method can also be employed in the production of a biaxially stretched film. The simultaneous biaxial stretching method is a method of stretching an unstretched film, as mentioned above, simultaneously in two directions, with the temperature controlled to be usually 70 to 120°C and preferably 80 to 110°C. The stretch ratio is preferably 4 to 50, more preferably 7 to 35 and further preferably 10 to 25 in terms of area ratio. Subsequently, a heat treatment is performed at a temperature of 160 to 240°C under tension or under relaxation of 30% or less to obtain a stretched orientation film. As the simultaneous and biaxial stretching device employing the above stretching system, a conventionally known stretching method such as a screw system, a pantograph system and a linear driving system can be employed.

When a so-called coating stretching method (in-line coating), in which a primer treatment or a hard coat treatment is applied to the film surface during the above stretching step of the biaxially stretched film, is performed, a coating solution for forming a primer layer or a hard coat layer may be applied to the uniaxially stretched film. When a primer or a hard coat layer is deposited on a film by a coating and stretching method, coating can be performed simultaneously with stretching, and the thickness of the coating layer can be reduced depending on the stretch ratio, with the result that a film suitable as a biaxially stretched film can be produced. Examples

Hereinafter, the present invention will be described in more detail with reference to Examples, but the present invention is not limited to the following Examples as long as it does not exceed the gist of the present invention.

Evaluation methods in the following Examples and Comparative Examples are as follows.

(1) Intrinsic viscosity of polyester

A sample (0.25 g) of an object to be measured was precisely weighed. To the sample, a mixed solvent (50 ml) of phenol/1,1,2,2-tetrachloroethane = 50/50 (weight ratio) was added to dissolve the sample. The resultant solution was measured at 30°C by use of an Ubbelohde viscosity tube. The Huggins constant was 0.32

(2) The glass-transition temperature of polyester

The glass transition temperature was measured in accordance with the method of JIS K7121-1987 using a differential scanning calorimeter "DSC7000x" (manufactured by Hitachi High-Tech Science Corporation). Specifically, the temperature of polyester, starting at 25°C, was increased to 280°C, decreased to 25°C and again increased to 260°C. The heating rate and cooling rate herein were 10°C/minute. The midpoint glass transition temperature during the second temperature increase time was determined as a glass-transition temperature.

(3) Melting point of polyester

The top of the melting peak, during the second temperature increase time, measured by the same apparatus and under the same conditions as those of the measurement of the glass transition temperature was determined as the melting point.

(4) Gas barrier properties (oxygen permeability)

Using an oxygen permeability measuring apparatus (OX-TRAN 2/21 manufactured by MODERNCONTROL), the oxygen permeability of the blow-molded bottles was measured. The oxygen permeability was a value measured at 72 hours after initiation of the measurement via conditioning at 23°C and 90% RH for 12 hours from initiation of measurement. The oxygen gas barrier properties were evaluated, relative to the oxygen permeability of a general-purpose PET bottle (a general-purpose PET 100% bottle obtained in Reference Example E1 described later) as 1. Specifically, the oxygen permeability of Reference Example E1 was divided by the oxygen permeability of a sample for comparison to obtain a ratio. Based on the ratio, evaluation was made. The oxygen gas barrier properties were evaluated as good when the ratio more than 1.

(5) Haze (Reflection haze)

The haze was measured by a haze meter "NDH7000SPII" (manufactured by Nippon Denshoku Co., Ltd.) in accordance with the method specified in JIS K 7136: 2000 "Plastics-Determination of haze for transparent materials" except that a light flux was focused on a 7.0 mm-square using an integrating sphere mask. In the case of a preform, a measurement site was designated as a body site 4 cm from the bottom. In the case of a blow-molded bottle, a measurement site was designated as a body site 3 cm from the bottom. Measurement was repeated 4 times and an average value of measured values was used as haze. As illustrated in Fig. 1, the preform was cut out in half in the longitudinal direction. The preform cut in half was placed such that the outer surface thereof faces an integrating sphere and a light flux is applied to the center of the preform in the width direction, and then, measurement of the preform was performed.

(6) Degree of pigmentation, b* value of bottle The degree of pigmentation of a bottle is indicated by a degree of pigmentation, b* value, which is a color difference measured by the "Testing methods for optical properties of plastics" specified by JIS K 7105-1981. A bottle having b* value of 2.0 or less is referred to as a colorless bottle. The degree of pigmentation, b* value, is more preferably 1.7 or less. The degree of pigmentation, b* value, can be obtained in accordance with Mathematical Formula 5. Note that, in Mathematical Formula 5, X, Y or Z is a tristimulus value. In the present invention, the correlation between a b* value and visual evaluation is approximately as shown in Table 1.

[Mathematical Formula 5]

$$b* = 200[(Y/Y_0)^{1/3} - (Z/Z_0)^{1/3}]$$

[Table 1]

| b* value | 0~2 | 2~4 | 4~6 | 6~8 | 8~ |
|---|---|---|---|---|---|
| Visual Expression | Colorless | Extremely light yellow-brown | Light yellow-brown | Slightly dark yellow-brown | Dark yellow-brown |

[Production of Masterbatch]

(Example A1)

Using KZW15 (manufactured by TECHNOVEL CORPORATION), polyethylene furanoate (IV = 1.12 dl/g, glass transition point 83°C, manufactured by Mitsubishi Chemical Corporation) as the polyester resin (B) and polyethylene terephthalate (BK2180, IV = 0.83 dl/g, glass transition point 74°C, manufactured by Mitsubishi Chemical Indonesia) as the polyester resin (A) were kneaded to prepare a masterbatch. Specifically, the following operations were performed. Pellets of polyethylene furanoate and pellets of polyethylene terephthalate were weighed such that the proportion of the polyester resin (B), determined by (Mathematical Formula 1), was 50 mass%, and stirred uniformly to obtain a pellet mixture for preparing a masterbatch. The obtained pellet mixture was put in a hopper and kneaded in the following conditions to obtain a molten resin from a strand die of 2.5 mmΦ. The molten resin obtained was directly soaked and cooled in a water vessel of 23°C to form a strand, which was passed through a pelletizer to obtain a masterbatch of polyethylene furanoate and polyethylene terephthalate.

Proportion of polyester resin (B) (mass%) = content of polyester resin (B)/(content of polyester resin (A) + content of polyester resin (B))    (Mathematical Formula 1)

(Melt-kneading conditions)
Pellet supply amount: 2.0 kg/h
Cylinder temperature C1: 200°C, C2 to C8: 280°C
Head temperature: 280°C
Die temperature: 280°C

Screw rotation speed: 250 rpm

(Example A2)

A master batch was obtained in the same manner as in Example A1 except that pellets of polyethylene furanoate and pellets of polyethylene terephthalate were weighed such that the proportion of the polyester resin (B), determined by (Mathematical Formula 1), was 60 mass%.

(Example A3)

A master batch was obtained in the same manner as in Example A1 except that pellets of polyethylene furanoate and pellets of polyethylene terephthalate were weighed such that the proportion of the polyester resin (B), determined by (Mathematical Formula 1), was 70 mass%.

[Production of Preform for Bottle]

[Example B1]

A preform for a bottle was produced using raw materials for the preform, that is, the masterbatch of Example A1 and polyethylene terephthalate (BK2180, IV=0.83 dl/g, glass transition point 74°C, manufactured by Mitsubishi Chemical Indonesia) as the polyester resin (A). Specifically, the following operations were performed. Pellets of the masterbatch of Example A1 and pellets of polyethylene terephthalate were weighed such that the proportion of the polyester resin (B), determined by (Mathematical Formula 1), was 10 mass%, and stirred uniformly to obtain a pellet mixture for preparing a preform for a bottle. The obtained pellet mixture was put in a hopper, and subjected to injection molding in the following conditions to obtain a preform for a bottle. The volume was 22.7 ml, the weight was 20 g, and the body average wall thickness was 2.9 mm.

(Injection molding conditions)
"CLF 180" manufactured by CHUAN LIH FA
Melting temperature: 300°C
Injection pressure: 290 bar
Cycle time: 22 seconds
Cooling time: 5 seconds

[Example B2]

A preform for a bottle was obtained in the same manner as in Example B1 except that the masterbatch obtained in Example A2 was used. The capacity, weight, and body average wall thickness were the same as those in Example B1.

[Example B3]

A preform for a bottle was obtained in the same manner as in Example B1 except that the masterbatch obtained in Example A3 was used. The capacity, weight, and body average wall thickness were the same as those in Example B1.

[Comparative Example B1]

Polyethylene furanoate (IV = 1.12 dl/g, glass transition point 83°C, manufactured by Mitsubishi Chemical Corporation) as the polyester resin (B) and polyethylene terephthalate (BK2180, IV = 0.83 dl/g, glass transition point 74°C, manufactured by Mitsubishi Chemical Indonesia) as the polyester resin (A) were used raw materials for a preform to produce a preform for a bottle not via a masterbatch. Specifically, the following operations were performed. Pellets of polyethylene furanoate and pellets of polyethylene terephthalate were weighed such that the proportion of the polyester resin (B), determined in (Mathematical Formula 1), was 10 mass%, and stirred uniformly to obtain a pellet mixture for producing a preform for a bottle. The obtained pellet mixture was put in a hopper, and subjected to injection molding in the following conditions to obtain a preform for a bottle. The volume was 22.7 ml, the weight was 20 g, and the body average wall thickness was 2.9 mm.

(Injection molding conditions)
"CLF 180" manufactured by CHUAN LIH FA

Melting temperature: 300°C
Injection pressure: 290 bar
Cycle time: 22 seconds
Cooling time: 5 seconds

[Reference Example C1] Production of preform of general-purpose PET 100% bottle

Commercially available polyester (polyethylene terephthalate, trade name "NOVAPEX BK2180", IV=0.83 dl/g, glass transition point 74°C, manufactured by Mitsubishi Chemical Corporation) was used as a raw material for a preform to produce a preform for a bottle. The volume was 22.7 ml, the weight was 20 g, and the body average wall thickness was 2.9 mm.

(Injection molding conditions)
"CLF 180" manufactured by CHUAN LIH FA
Melting temperature: 300°C
Injection pressure: 290 bar
Cycle time: 22 seconds
Cooling time: 5 seconds

[Production of Blow-molded Bottle]

[Examples D1 to D3, Comparative Example D1, Reference Example E1]

The preforms of Examples B1 to B3 were blow-molded using a blow-molding machine (FRB-1 manufactured by FRONTIER Inc.) to obtain blow-molded bottles of Examples D1 to D3. The preform of Comparative Example B1 was similarly blow-molded to obtain a blow-molded bottle of Comparative Example D1. The preform of Reference Example C1 was similarly blow-molded to obtain a blow-molded bottle of Reference Example E1. Each blow-molded bottle had a volume of 280 ml, a weight of 20 g, an average body thickness of 0.26 mm, and to be used for vending a hot product therein. The yield of blow-molding was 100%.

The obtained evaluation results are shown in Table 2.

[Table 2]

| Masterbatch | Proportion (mass%) of polyester resin (B) | I V (l/g) | Tg (°C) | Preform | Haze | Color difference | | | I V (l/g) | Bottle | Haze | Color difference | | | I V (l/g) | Gas barrier property (times) | Note |
|---|---|---|---|---|---|---|---|---|---|---|---|---|---|---|---|---|---|
| | | | | | | L* | a* | b* | | | | L* | a* | b* | | | |
| Example A1 | 5 0 | 0.72 | 81.1 | **Example B1** | 2.0 | 88.2 | 0.8 | 6.9 | 0.69 | **Example D1** | 1.5 | 96.0 | -0.2 | 1.8 | 0.69 | 1.21 | MB |
| Example A2 | 6 0 | 0.73 | 82.9 | **Example B2** | 2.1 | 86.7 | 1.1 | 6.6 | 0.67 | **Example D2** | 4.8 | 93.9 | 0.0 | 3.4 | 0.67 | 1.26 | MB |
| Example A3 | 7 0 | 0.79 | 83.3 | **Example B3** | 5.2 | 79.8 | 2.6 | 7.6 | 0.69 | **Example D3** | 15.4 | 86.6 | 0.8 | 6.8 | 0.69 | 1.26 | MB |
| | | | | **Comparative Example B1** | 8.5 | 73.7 | 4.6 | 21.9 | 0.77 | **Comparative Example D1** | 21.6 | 82.6 | 1.0 | 8.6 | 0.77 | 1.56 | Non-MB CT22seconds |
| | | | | **Reference Example C1** | 1.3 | 89.4 | 0.2 | 0.9 | - | **Reference Example E1** | 1.2 | 96.0 | -0.1 | 1.1 | - | 1.00 | PET100% |

**MB: Masterbatch**
**CT: Cycle time**

From the results summarized in Table 2, the followings were found. Examples D1 to D3 had higher gas barrier properties than Reference Example E1. In Examples D1 to D3, the cloudiness and b* were low and the appearance was good as compared with Comparative Example D1 in which the same cycle time of 22 seconds was employed. Thus, in Examples D1 to D3 molded via masterbatches, it was practical to form a bottle having a good appearance while ensuring the same cycle time as that of Reference Example E1, that is, the same productivity as that of the PET bottle.

By comparison between Examples B1 to B3 and Examples D1 to D3, it was found that the haze and b* values were increased by undergoing blow molding. Therefore, it has been found that production of a preform having a good appearance is necessary in order to obtain a bottle having a good appearance.

(Example F1)

Using a small kneader (Xplore series MC15 manufactured by Xplore Instruments), 7.5 g of polyethylene furanoate (IV = 1.12 dl/g, glass transition point 83°C, manufactured by Mitsubishi Chemical Corporation) and 7.5 g of polyethylene terephthalate (GM700Z, IV = 0.84 dl/g, glass transition point 74°C, manufactured by Mitsubishi Chemical Corporation) as raw materials were supplied from a hopper, kneaded under a nitrogen atmosphere at a rotation speed of 100 rpm and 240°C for 5 minutes, and thereafter, the kneaded resin was recovered from a purge hole to obtain a strand of a polyester masterbatch. When the resin was recovered, the resin was quenched in pure water at 23°C to be kept from crystallization. The intrinsic viscosity (IV value) of the strand of the obtained masterbatch was 0.76 dl/g. Subsequently, 3 g of the obtained masterbatch and 12 g of polyethylene terephthalate which is the same product as used for preparation of the masterbatch, were kneaded in the same manner as described above to obtain a strand of a polyester composition (polyethylene furanoate/polyethylene terephthalate =10/90 wt%).

(Example F2)

A strand of a polyester composition (polyethylene furanoate/polyethylene terephthalate =10/90 wt%) was obtained in the same manner as in Example F1 except that the contents of resins for preparing a masterbatch were changed to 13.5 g of polyethylene furanoate and 1.5 g of polyethylene terephthalate, and the contents of resins for preparing the polyester composition were changed to 1.67 g of masterbatch and 13.33 g of polyethylene terephthalate. Note that, the strand of the obtained masterbatch had an intrinsic viscosity (IV value) of 0.82 dl/g.

(Comparative Example F1)

As raw materials, 1.5 g of polyethylene furanoate (IV=1.12 dl/g, glass transition point 83°C, manufactured by Mitsubishi Chemical Corporation) and 13.5 g of polyethylene terephthalate (GM700Z, IV=0.84 dl/g, glass transition point 74°C, manufactured by Mitsubishi Chemical Corporation) were used and supplied from a hopper, and kneaded under a nitrogen atmosphere at a rotation speed of 100 rpm and 240°C for 5 minutes, and thereafter, the resin kneaded was collected from a purge hole to obtain a strand of a polyester composition (polyethylene furanoate/polyethylene terephthalate =10/90 wt%).

(Example G1)

A metal frame (SUS304 having an outer diameter of 110 mm, an inner diameter of 70 mm, and a thickness of 0.2 mm) surface-treated with a mold release agent was placed on a polyimide film of 150 mm × 150 mm (UPILEX-S, thickness of 0.05 mm, manufactured by Ube Industries, Ltd.). The polyester composition (2.0 g) obtained in Example F1 was weighed and placed within the metal frame and the same polyimide film (150 mm × 150 mm) as the above was further placed on the metal frame. The masterbatch sandwiched between the polyimide films was clamped between two iron plates (160 mm × 160 mm, 3 mm in thickness), and hot-pressed by a hot press machine (IMC-180C type, manufactured by Imoto Machinery Co., Ltd.) to obtain a hot-press film of 70 mm × 70 mm × 0.2 mm in thickness. The hot pressing temperature was 280°C, and the hot pressing time was 1 minute for preheating and 1 minute for pressing. The haze of the obtained film was as good as 1.33%. The intrinsic viscosity (IV value) of the obtained film was 0.62 dl/g.

(Example G2)

A hot press film was obtained in the same manner as in Example G1 except that the polyester composition obtained in Example F2 was used. The obtained film had a haze of 4.30%, which was inferior to that of Example G1, but better than that of Comparative Example G1 using no masterbatch. The intrinsic viscosity (IV value) of the obtained film was 0.68 dl/g.

(Comparative Example G1)

A hot press film was obtained in the same manner as in Example G1 except that the polyester composition obtained in Comparative Example F1 was used. The haze of the obtained film was 7.27%, and the transparency was insufficient. The intrinsic viscosity (IV value) of the obtained film was 0.64 dl/g.

**Claims**

1.  A masterbatch comprising:

    a polyester resin (A) containing a structural unit (A-1) derived from terephthalic acid and a structural unit (A-2) derived from an aliphatic diol; and
    a polyester resin (B) containing a structural unit (B-1) derived from a 2,5-furandicarboxylic acid and a structural unit (B-2) derived from 1,2-ethanediol, wherein
    a proportion of the polyester resin (B), determined by (Mathematical Formula 1), is 45 mass% to 90 wt%, and
    an intrinsic viscosity (IV value), measured under (Condition 1), is 0.50 dl/g to 1.20 dl/g.

    (Mathematical Formula 1) Proportion of polyester resin (B) (mass%) = content of polyester resin (B) / (content of polyester resin (A) + content of polyester resin (B))

    (Condition 1) a 0.25 g portion of the masterbatch, dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

2.  The masterbatch according to claim 1, wherein the masterbatch is used for molding a pressure-resistant bottle, a bottle for vending a hot product therein or a heat-resistant bottle.

3.  A method for producing a molded object, comprising:

    a step of preparing a masterbatch containing a polyester resin (A) containing a structural unit (A-1) derived from terephthalic acid and a structural unit (A-2) derived from an aliphatic diol, and
    a polyester resin (B) containing a structural unit (B-1) derived from a 2,5-furandicarboxylic acid and a structural unit (B-2) derived from 1,2-ethanediol, and having
    a proportion of the polyester resin (B), determined by (Mathematical Formula 1), of 90 mass% or less, and an intrinsic viscosity (IV value), measured under (Condition 1), of 0.50 dl/g to 1.20 dl/g; and
    a step of forming a molded object by melt-kneading the masterbatch and the polyester resin (A) separately.

    (Mathematical Formula 1) Proportion of polyester resin (B) (mass%) = content of polyester resin (B) / (content of polyester resin (A) + content of polyester resin (B))

    (Condition 1) a 0.25 g portion of the masterbatch, dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

4.  The method for producing the molded object according to claim 3, wherein

    the masterbatch is a masterbatch in which the proportion of a polyester resin (B), determined by (Mathematical Formula 1), is 45 mass% to 90 wt%, and
    the step of forming the molded object is a step of forming a preform for a bottle by blending the masterbatch and the polyester resin (A).

5.  A method for producing a blow-molded bottle, comprising a step of forming a bottle by blow-molding the preform according to claim 4.

6.  A preform for a bottle formed of a resin composition containing

a polyester resin (A) containing a structural unit (A-1) derived from terephthalic acid and a structural unit (A-2) derived from an aliphatic diol, and

a polyester resin (B) containing a structural unit (B-1) derived from a 2,5-furandicarboxylic acid and a structural unit (B-2) derived from 1,2-ethanediol, and having

a proportion of the polyester resin (B), determined by (Mathematical Formula 1), is 5 to 25 mass%, wherein an intrinsic viscosity (IV value), measured under (Condition 2), is 0.65 dl/g or more and 1.00 dl/g or less, and a haze, measured in accordance with JIS K 7136: 2000 "Plastics-Determination of haze for transparent materials" except that a light flux is focused on a 7.0 mm-square, is 0.1 to 8%.

(Mathematical Formula 1) Proportion of polyester resin (B) (mass%) = content of polyester resin (B) / (content of polyester resin (A) + content of polyester resin (B))

(Condition 2) a 0.25 g sample, cut out from the preform and then dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

7. A blow-molded bottle formed of a resin composition containing

a polyester resin (A) containing a structural unit (A-1) derived from terephthalic acid and a structural unit (A-2) derived from an aliphatic diol, and

a polyester resin (B) containing a structural unit (B-1) derived from a 2,5-furandicarboxylic acid and a structural unit (B-2) derived from 1,2-ethanediol, and having

a proportion of the polyester resin (B), determined by (Mathematical Formula 1), of 5 to 25 mass%, wherein an intrinsic viscosity (IV value), measured under (Condition 3), is 0.65 dl/g or more and 1.00 dl/g or less, and a haze, measured in accordance with JIS K 7136: 2000 "Plastics-Determination of haze for transparent materials" except that a light flux is focused on a 7.0 mm-square, is 0.1 to 20%.

(Mathematical Formula 1) Proportion of polyester resin (B) (mass%) = content of polyester resin (B) / (content of polyester resin (A) + content of polyester resin (B))

(Condition 3) a 0.25 g sample, cut out from the blow-molded bottle and then dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

8. The blow-molded bottle according to claim 7, which is a pressure-resistant bottle for filling a carbonated liquid.

9. The blow-molded bottle according to claim 7, which is a bottle for vending a hot product or a heat-resistant bottle for filling at a high temperature.

10. A beverage product comprising the blow-molded bottle according to any one of claims 7 to 9 filled with a beverage.

11. The method for producing a molded object according to claim 3, wherein the molded object is a film.

12. A film formed of a resin composition containing a polyester resin (A) containing a structural unit (A-1) derived from terephthalic acid and a structural unit (A-2) derived from an aliphatic diol, and

a polyester resin (B) containing a structural unit (B-1) derived from a 2,5-furandicarboxylic acid and a structural unit (B-2) derived from 1,2-ethanediol, and having

a proportion of a polyester resin (B), determined by (Mathematical Formula 1), of 1 to 90 mass%, wherein an intrinsic viscosity (IV value), measured under (Condition 4), is 0.50 dl/g or more and 1.00 dl/g or less, and a haze, measured in accordance with JIS K 7136: 2000 "Plastics-Determination of haze for transparent materials" except that a light flux is focused on a 7.0 mm-square, is 0.01 to 6.0%.

Proportion of polyester resin (B) (mass%) = content of polyester resin (B) / (content of polyester resin (A) + content of polyester resin (B))

(Condition 4) a 0.25 g portion of the film, dissolved in 50 ml of a mixed solvent of phenol/1,1,2,2-tetrachloroethane = 50/50 (weight ratio), is measured at 30°C using an Ubbelohde viscometer, wherein a Huggins constant is set to 0.32.

FIG. 1

Light flux

$I_1 = I_2$

$I_1$ $I_2$

Preform

Integrating sphere

## INTERNATIONAL SEARCH REPORT

| International application No. |
|---|
| **PCT/JP2022/047191** |

**A. CLASSIFICATION OF SUBJECT MATTER**

*C08J 3/22*(2006.01)i; *B65D 1/00*(2006.01)i; *B65D 65/02*(2006.01)i; *C08J 5/18*(2006.01)i; *C08L 67/02*(2006.01)i
FI: C08J3/22 CFD; B65D1/00 110; B65D65/02 E; C08L67/02; C08J5/18

According to International Patent Classification (IPC) or to both national classification and IPC

**B. FIELDS SEARCHED**

Minimum documentation searched (classification system followed by classification symbols)

C08J3/00 - 3/28, C08J99/00, B65D1/00 - 1/48, C08J5/00 - 5/02, C08J5/12 - 5/22, C08K3/00 - 13/08, C08L1/00 - 101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-104070 A (TOYO SEIKAN KAISHA LTD) 05 July 2018 (2018-07-05) claims, paragraphs [0017], [0022], [0025], [0033], examples | 1-12 |
| A | JP 2018-518396 A (E I DU PONT DE NEMOURS AND COMPANY) 12 July 2018 (2018-07-12) entire text | 1-12 |
| A | JP 2017-509773 A (BASF SE) 06 April 2017 (2017-04-06) entire text | 1-12 |
| A | JP 2018-204005 A (MITSUBISHI CHEM CORP) 27 December 2018 (2018-12-27) entire text | 1-12 |
| A | JP 2019-104161 A (KURARAY CO) 27 June 2019 (2019-06-27) entire text | 1-12 |
| A | JP 11-106617 A (MITSUI CHEMICALS INC) 20 April 1999 (1999-04-20) entire text | 1-12 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 March 2023** | **20 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| | International application No. |
|---|---|
| | **PCT/JP2022/047191** |

**C.     DOCUMENTS CONSIDERED TO BE RELEVANT**

| Category* | Citation of document, with indication, where appropriate, of the relevant passages | Relevant to claim No. |
|---|---|---|
| A | WO 2020/158903 A1 (MITSUBISHI ENGINEERING-PLASTICS CORP) 06 August 2020 (2020-08-06)<br>    entire text | 1-12 |
| A | JP 07-070419 A (MITSUI PETROCHEMICAL IND) 14 March 1995 (1995-03-14)<br>    entire text | 1-12 |
| A | US 2018/0346662 A1 (THE COCA-COLA COMPANY) 06 December 2018 (2018-12-06)<br>    whole document | 1-12 |
| A | CN 107840948 A (NINGBO INSTITUTE OF MATERIALS TECHNOLOGY AND ENGINEERING, CHINESE ACADEMY OF SCIENCES) 27 March 2018 (2018-03-27)<br>    whole document | 1-12 |

Form PCT/ISA/210 (second sheet) (January 2015)

**INTERNATIONAL SEARCH REPORT**
Information on patent family members

International application No.

**PCT/JP2022/047191**

| Patent document cited in search report | | | Publication date (day/month/year) | Patent family member(s) | | | Publication date (day/month/year) |
|---|---|---|---|---|---|---|---|
| JP | 2018-104070 | A | 05 July 2018 | (Family: none) | | | |
| JP | 2018-518396 | A | 12 July 2018 | US 2018/0141260 A1 whole document WO 2016/200653 A1 whole document EP 3307515 A1 whole document | | | |
| JP | 2017-509773 | A | 06 April 2017 | US 2017/0183494 A1 whole document WO 2015/150141 A1 whole document EP 3126446 A1 whole document | | | |
| JP | 2018-204005 | A | 27 December 2018 | JP 2022-173250 A entire text | | | |
| JP | 2019-104161 | A | 27 June 2019 | (Family: none) | | | |
| JP | 11-106617 | A | 20 April 1999 | (Family: none) | | | |
| WO | 2020/158903 | A1 | 06 August 2020 | US 2022/0348762 A1 whole document EP 3919554 A1 whole document | | | |
| JP | 07-070419 | A | 14 March 1995 | (Family: none) | | | |
| US | 2018/0346662 | A1 | 06 December 2018 | WO 2017/096200 A1 whole document | | | |
| CN | 107840948 | A | 27 March 2018 | (Family: none) | | | |

Form PCT/ISA/210 (patent family annex) (January 2015)

**REFERENCES CITED IN THE DESCRIPTION**

**Patent documents cited in the description**

- JP 2018510800 A

- JP 2017536427 A